# EUROPEAN PATENT APPLICATION

(11) **EP 2 022 340 A2**
(43) Date of publication of application: **11.02.2009**
(21) Application number: 08161782.1
(22) Date of filing: 05.08.2008
(51) Int. Cl.: A23L 1/10, A23L 1/182

(54) **A method of preparing a precooked and seasoned food product based on cereals in grain form**

(30) Priority: 06.08.2007 IT TO20070587
(71) Applicant: F. & P. Rice S.A., 6900 Lugano (CH)
(72) Inventor: Preve, Mario, 6900 Lugano (CH)
(74) Representative: Rambelli, Paolo

(57) **Abstract**

A method of preparing a cereal-based, pre-cooked and seasoned food product, particularly a risotto, packaged in a wrapper (B) made of heat-resistant and heat-sealable plastics material, comprising the steps of:
- measuring out into the wrapper (B) the cereal-based product (R), an aqueous phase (CL) including a seasoning and, optionally, a solid food phase (FS), wherein the aqueous phase is measured out in sufficient quantity to permit the hydration and cooking of the cereals (R),
- sealing the wrapper (B), and
- subjecting the scaled wrapper (B) to cooking in a cooking environment (6) which is heated under pressure,
and wherein, after scaling and prior to their introduction into the cooking environment (6), the wrappers (B) are subjected to a rotary motion suitable for bringing about mixing of the contents and homogeneous hydration.

## Description

The present invention relates to a method of preparing a cereal-based, seasoned and pre-cooked food product, particularly a risotto, packaged in a wrapper or bag made of heat-resistant and heat-sealable plastics material.

In particular, the invention relates to a method comprising the steps of:
- measuring out into the wrapper the cereal-based product, an aqueous phase including a seasoning and, optionally, a solid food phase, wherein the aqueous phase is measured out in sufficient quantity to permit the hydration and cooking of the product;
- sealing the wrapper, and
- subjecting the sealed wrapper to cooking in a cooking environment which is heated under pressure, typically in an autoclave.

Although the method of the invention is applicable to cereal-based products in general, typically in grain form, the following description will refer to the production of a seasoned and pre-cooked risotto which constitutes the preferred embodiment.

The seasoned and pre-cooked risotto which is produced as a result of the method is a product that is stable in storage, sterilized or pasteurized, and ready to eat; typically, for consumption, the contents of the package can be poured into a pan with the addition of a small quantity of water and then heated for periods of about 2 minutes to produce a hot and creamy product.

Alternatively, the packaged product may be prepared for consumption by treatment in a microwave oven; for this purpose, the wrapper is opened and a small quantity of water is introduced, after which the wrapper is placed in the microwave oven where it is subjected to heat treatment for periods of the order of about 2 minutes at maximum power (about 750 W).

Products of the above-mentioned type are described, for example, in GB 2 352 706 which describes in particular a bag that is made of plastics material suitable for being treated in a microwave oven and is used for the packaging and for the cooking and/or sterilization of the product.

GB 2 352 706 also discusses the problems inherent in the production of a risotto that is pre-cooked and sealed in a can, mentioning as a disadvantage relating to its production the fact that, as a result of the cooking and sterilization treatment, the canned risotto tends to form an agglomerated and sticky mass rather than a free flowing particulate product.

According to the teaching of the document cited, with the use of a packaging bag which can undergo microwave treatment, the microwave treatment to which the product is subjected prior to consumption is useful for producing a smooth-running and free flowing granular product which has separate grains and an appearance that is more attractive to the consumer.

However, tests carried out by the Applicant show that, particularly when an aqueous suspension or dispersion containing a seasoning is used as the aqueous phase for hydrating the cereals, and to an even greater extent when further solid food ingredients in pieces such as, for example, aromatic herbs, vegetable products cubed, flaked or in granular form, or meat or fish in granular form are added to the seasoning suspension, there are still disadvantages relating to the production of a homogeneous product of uniform appearance and with free flowing grains.

In particular, a typical disadvantage is the production of a product with agglomerated grains that is extensively non-homogeneous; when the seasoning suspension, with or without pieces, causes coloration of the grains, regions of more intense coloration are generally visible and denote non-homogeneous absorption of the seasoning during hydration since the seasoning accumulates in certain regions of the product, particularly in the top region of the wrapper in which the pre-cooked product is packaged.

Moreover, the concentration of the seasoning in the top region of the wrapper causes excessive cooking of the cereal in that region during the subsequent sterilization stage and the consequent formation of a block of product and seasoning.

When the seasoning also contains ingredients in pieces, a concentration of the pieces in the top region of the wrapper will be observed.

These disadvantages have a negative impact on the organoleptic characteristics of the product both with regard to its appearance and in relation to its palatability and attractiveness.

The object of the present invention is to provide an improved method that overcomes the above-mentioned disadvantages and produces a seasoned, pre-cooked and sterilized, packaged product which has improved homogeneity characteristics and in which the cereal-based product is present in its package in the form of seasoned and free-flowing grains, even before being subjected to microwave treatment for consumption.

The subject of the invention is therefore a method having the characteristics defined in the appended claims.

In particular, the method according to the invention is based upon the recognition of the fact that the cooking and sterilization operation, even if performed in a rotary autoclave, is not sufficient to achieve adequate mixing of the contents of the wrappers that are subjected to treatment and to give rise to the desired and necessary homogeneity of the product.

According to the invention, the sealed wrappers into which the product has been measured out are subjected to a rotary or oscillatory motion suitable for causing mixing of the contents and homogeneous hydration prior to their introduction into the cooking environment.

Preferably, this motion takes place immediately after the sealing of the bag and continues until complete or substantial hydration of the cereal grains by means of the aqueous seasoning phase has taken place.

Further characteristics and advantages of the method according to the invention will become clear from the following detailed description, given with reference to the appended drawings which are provided by way of non-limiting example and in which,
- Figures 1a, 1b, and 1c are schematic views which illustrate the sequence of steps for the measuring out into a bag of a cereal-based product, rice in the embodiment in question, and the respective seasoning,
- Figure 2 is a schematic view which shows the mixing step which is performed by the rotation of the sealed bags about a rotation axis a-a perpendicular to the longitudinal axis b-b of the bag,

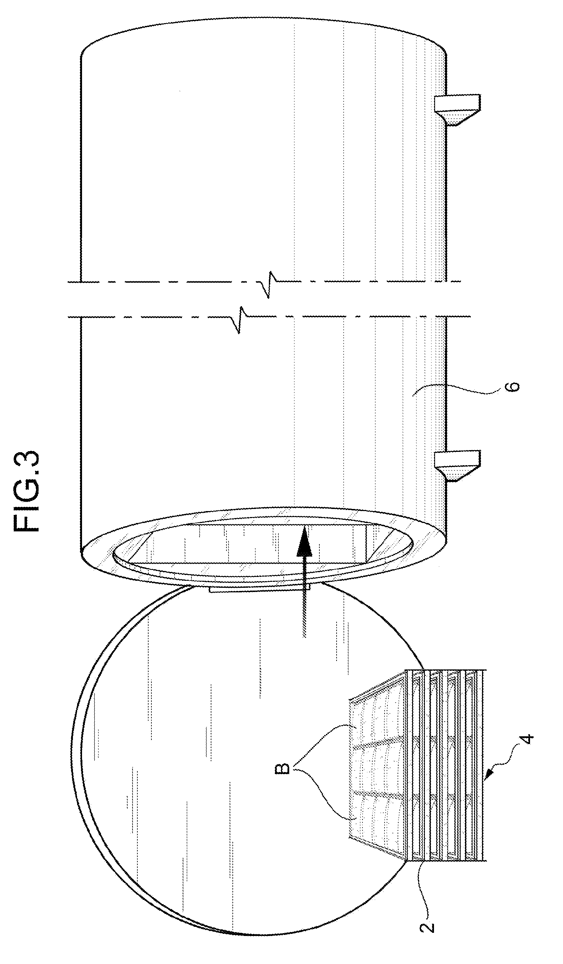

- Figure 3 is a schematic view relating to the loading of the sealed bags coming from the mixing stage into an autoclave, and

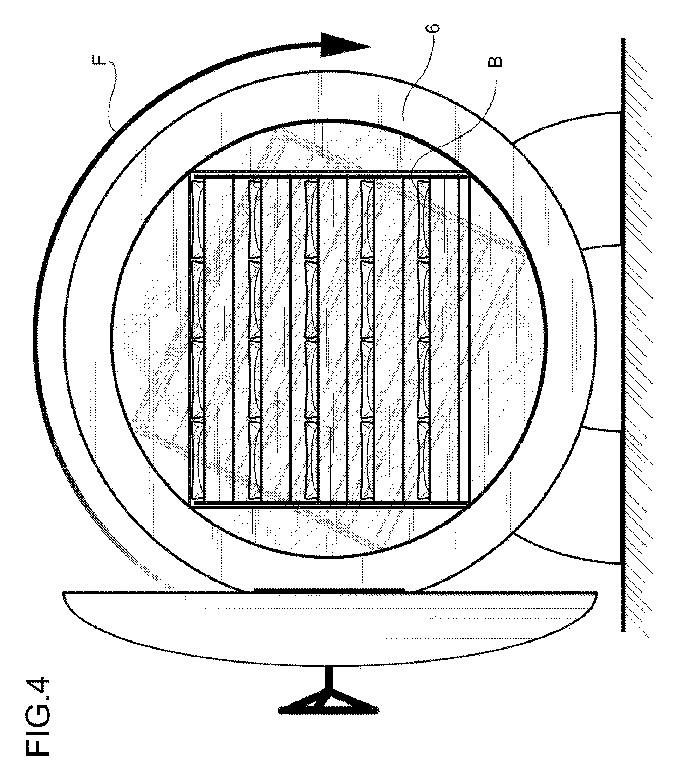

- Figure 4 is a schematic view of the autoclave.

In the appended drawings, the product is packaged in a wrapper or container which, by way of example, is constituted by a bag B of which a purely schematic view is provided. In the preferred embodiment, bags made of plastics material of the type known by the term "doypack" are used; these have two main walls which are made of sheet material and are welded along their longitudinal edges, and a base wall which is also made of a sheet material that is welded to the lower longitudinal edges of the two main walls and to the bottom edges of those walls.

Although the following description is given with reference to the packaging of the product in bags, the description is intended to be equally applicable to packaging wrappers of other types such as, for example, tubular, prismatic or dish-like wrappers sealable with a sealing film.

"Doypack" bags or the like are available commercially and are made of sheet polymer materials which have a low oxygen permeability (typically less than 1 cm³/m²/24 hours) as well as heat-resistance and heat-sealability characteristics.

Plastics materials that can be used are, for example, laminates formed by a plurality of layers, for example, comprising an inner polypropylene layer, a polyamide layer, an oxygen barrier layer, and a polyester layer, stuck together.

These plastics materials are intended to have steam impermeability characteristics as well as being able to withstand sterilization temperatures. The initial steps of the method comprise the measuring out into the bags of the food product which, in the embodiment illustrated, is rice R. Typically, dry, white or parboiled rice is used. The moisture content of the rice does not generally exceed 20% by weight and is typically between 12% and 16% by weight.

As already indicated above, however, the present invention is not limited to the selection of rice as the cereal-based product but extends to other cereals, generally in grain form.

The product is preferably measured out into the bag sequentially, that is, by measuring out first of all the desired quantity of the cereal or rice, which depends on the capacity of the bag used. For this purpose, the capacity of the bag is generally between 0.1 and 1 kg of product, preferably 250 g of product.

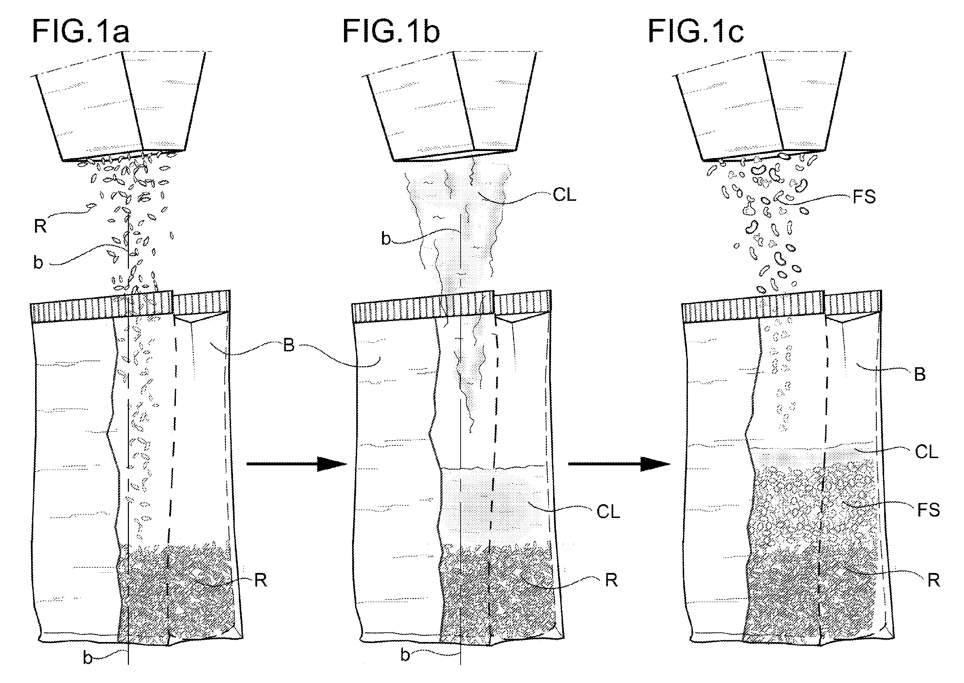

After the rice R has been measured out (Figure 1a), a predetermined quantity of an aqueous phase that is sufficient to achieve hydration of the cereal R to the desired extent after cooking is measured out into the bag B. Naturally, the quantity of aqueous phase must be predetermined accurately, taking into account that the cooking step is performed with the bag sealed, that is, without the discharge of steam to the exterior.

Typically, the aqueous phase is a liquid seasoning indicated CL (Figure 1b). Generally, the liquid seasoning is a solution or suspension prepared beforehand by dissolving or dispersing in water seasonings of various kinds such as: vegetables in powder form, salt, flavourings, oils, vegetable or protein extracts and aromatic herbs, and optionally subjecting the mixture thus obtained to a homogenization step.

The liquid seasoning may optionally comprise grains or particles of other food products providing flavour such as cubed or sliced vegetables, for example, mushrooms, cubed or diced meat or fish, or the like.

However, in a further embodiment, the solid phase indicated FS is measured out into the bag sequentially, after the measuring out of the liquid seasonings CL (see Figures 1c).

As shown in Figure 1c, as a result of the sequential measuring out of the ingredients, the various ingredients are arranged in the bag in layers. Premixing of the ingredients prior to measuring them out into the bag, on the other hand, would make them quite difficult to measure out, particularly if the process were performed on an industrial scale.

The next step of the method according to the invention, which is not shown in the drawings, comprises the sealing of the bag along the periphery of its mouth. This step is generally performed by heat sealing, preferably with removal of the air contained in the top of the bag and blowing-in of an inert gas useful for preventing oxidative phenomena.

In order to carry out the cooking and sterilization step, the bags B are positioned lying horizontally on supporting trays 2 provided with perforated containing cells; the supporting trays 2, piled one upon another, form a stack which is introduced, by means of a trolley 4, into a rotary (or static) autoclave 6. The cooking and sterilization heat treatment is carried out in the autoclave under steam pressure at a temperature of at least 115°C and more preferably between 118°C and 125°C, for periods of the order of 20-90 minutes.

When the method is implemented on an industrial scale, the autoclave 6 can house a plurality of stacks of trays 2, for example, from three to five stacks, arranged in a row inside the autoclave 6.

As a result, on account of the time required to load the bags B onto the trays 2 and also the time required to load a plurality of stacks of trays into the autoclave 6, the cereal grains are subjected to substantial hydration during this waiting time.

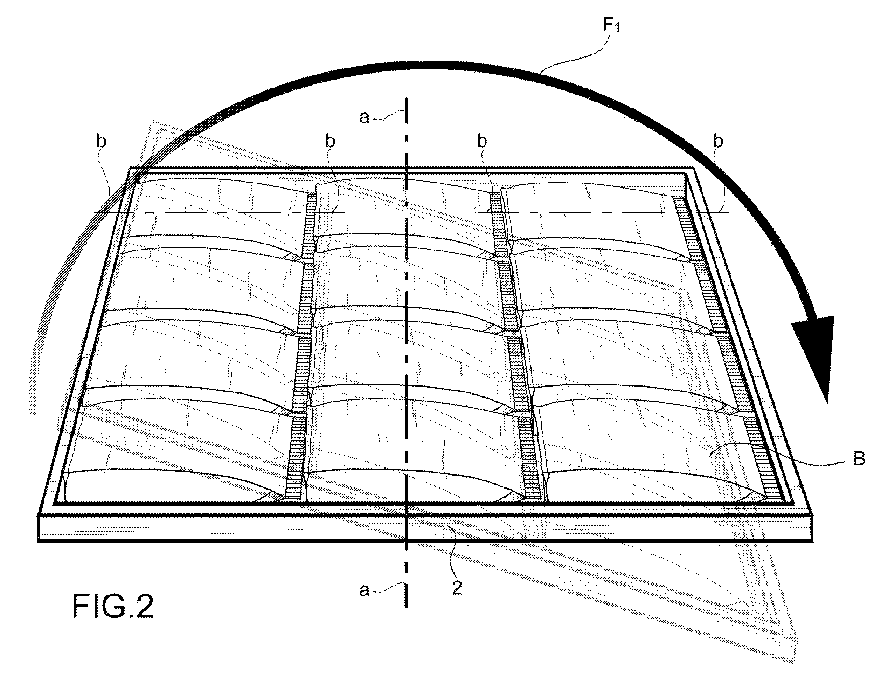

According to an innovative characteristic of the method of the invention illustrated in the schematic view of Figure 2, after the bags B have been sealed, they are positioned lying horizontally on conventional supporting trays 2 and, before being loaded into the autoclave 6, are subjected to a rotary or oscillatory motion suitable for bringing about mixing of the contents and homogeneous hydration.

The rotary motion preferably takes place about a rotation axis, for example a-a, which is perpendicular to the longitudinal axes of the bags B, indicated b-b in Figures 1a and 1b, that is, perpendicular to the direction in which the ingredients are introduced into the bags B.

The contents of the bags thus undergo homogenization resulting from the mixing of the ingredients contained in the top region of the bag with the ingredients contained in the bottom region.

The rotary or oscillatory motion may be through 180° or 360°, so as to turn the wrappers over, but angular motions through an angle of less than 180° can also be contemplated.

By way of example, the arrow indicated F1 in Figure 2 illustrates the rotary motion of a tray 2 supporting bags B. It is particularly important that the above-described mixing operation by means of rotary motion be performed before the liquid seasoning CL has caused substantial hydration of the grains.

It is intended that, in industrial implementation, the above-mentioned rotary motion may be brought about by apparatus arranged to rotate simultaneously a plurality of trays 2 arranged on top of one another or side by side.

Cooking is preferably performed in a rotary autoclave. The bags B supported by the respective trays 2 are thus optionally subjected to a further rotary motion during the autoclave cooking process but this is normally performed about a rotation axis perpendicular to the axis a-a so as to give rise mainly to mixing in a lateral direction, that is, perpendicular to the top-to-bottom direction of the mixing performed in the previous step.

The rotary motion in the autoclave may be implemented, during the treatment period, continuously, intermittently, for at least one period of the cooking time, or throughout the duration of the cooking time.

As a result of the cooking and sterilization in the autoclave, the product obtained has substantial homogeneity of colour and of organoleptic characteristics. If solid granular seasonings have been added, they are distributed substantially homogeneously within the mass of cereal granules and, moreover, the product obtained is in the form of a mass of non-agglomerated, free-flowing granules.

The product thus has organoleptic characteristics that are particularly appetizing and attractive to the consumer.

## Claims

1. A method of preparing a cereal-based, pre-cooked and seasoned food product, particularly a risotto, packaged in a wrapper (B) made of heat-sealable and heat-resistant plastics material, comprising the steps of:
- measuring out into the wrapper (B) the cereal-based product (R), an aqueous phase (CL) including a seasoning and, optionally, a solid food phase (FS), wherein the aqueous phase is measured out in sufficient quantity to permit the hydration and cooking of the cereals (R),
- sealing the wrapper (B), and
- subjecting the sealed wrapper (B) to cooking in a cooking environment (6) which is heated under pressure,
**characterized in that,** after sealing and prior to introduction into the cooking environment (6), the wrapper (B) is subjected to a rotary motion suitable for bringing about mixing of the contents and increasing the homogeneity of the hydration thereof.

2. A method according to Claim 1, **characterized in that** the wrappers (B) are subjected to a rotary motion (F1) suitable for bringing about mixing of the part of the food product (R, CL, FS) that is contained in the top region of each wrapper (B) with the part of the food product that is contained in the bottom region.

3. A method according to Claim 1 or Claim 2, **characterized in that** the rotary motion is performed about an axis perpendicular to the longitudinal axis of each wrapper (B) which is parallel to the direction of introduction of the food product (R, CL, FS) into the bag (B).

4. A method according to any one of Claims 1 to 3, **characterized in that,** for the implementation of the rotary motion, the sealed wrappers (B) are positioned horizontally on trays (2) provided with cells and the trays (2) provided with cells are subjected to the rotary motion.

5. A method according to any one of Claims 1 to 4, **characterized in that** the step of subjecting the wrappers (B) to rotary motion is implemented immediately after the sealing of the wrapper (B) and before substantial hydration of the cereal-based product (R) by the aqueous phase (CL), and until all of the aqueous phase (CL), optionally including ingredients in pieces, has hydrated the cereal (R).

6. A method according to any one of Claims 1 to 5, **characterized in that** the steps of measuring out into the wrapper the cereal-based product (R) and the liquid seasoning (CL), or the liquid seasoning (CL) optionally including ingredients in pieces (FS) and, optionally, the solid seasoning phase (FS), are performed sequentially.

7. A method according to any one of Claims 1 to 6, **characterized in that** the cereal-based product is white or parboiled rice (R).

8. A method according to any one of Claims 1 to 7, **characterized in that** the aqueous seasoning phase (CL) is an aqueous suspension or solution including soluble or insoluble seasonings and optionally homogenized.

9. A method according to any one of Claims 1 to 8, **characterized in that** the cereal-based product is rice (R) having a water content no greater than 20% by weight.

10. A method according to any one of Claims 1 to 9, **characterized in that** the cooking and sterilization are performed in an autoclave (6) at a temperature of between 115°C and 125°C for periods of from 20 to 90 minutes.

11. A method according to Claim 10, **characterized in that** the cooking is performed in a rotary autoclave (6) in which the wrappers (B) are subjected to rotation continuously, intermittently, for at least one predetermined period of time within the cooking time, or throughout the duration of the cooking time, preferably about a rotation axis perpendicular to the rotation axis about which the aforementioned preliminary rotary motion was performed.

12. A method according to any one of the preceding claims, **characterized in that** the cereal-based product (R) is packaged in bags (B), particularly of the "doypack" type.
